# EUROPEAN PATENT APPLICATION

(11) **EP 1 355 278 A1**
(43) Date of publication of application: **22.10.2003**
(21) Application number: 02008714.4
(22) Date of filing: 18.04.2002
(51) Int. Cl.: G07C 5/00, G01M 17/007

(54) **A computerized system for managing motor-vehicle maintenance**

(71) Applicant: Logosystem S.p.A., 10090 Cascine Vica Rivoli (Torino) (IT)
(72) Inventor: Gambaletta, Renzo, 10138 Torino (IT)
(74) Representative: Serra, Francesco

(57) **Abstract**

A computerized system for managing the maintenance of motor-vehicles (2) is described and comprises an electronic data-monitoring unit (4) comprising a port CAN, K, L, (6), a CPU (8), and a radio-frequency transmission device (10). The radio-frequency device (10) exchanges dialogue with a radio modem (14) outside the vehicle and connected to a personal computer (12). The data is transmitted by the radio-frequency device (10) to the radio modem (14) for processing by the personal computer (12).

## Description

The present invention relates to a computerized system for managing motor-vehicle maintenance.

The system of the present invention relates in particular to the control and monitoring of fleets of motor-vehicles in order to be able to arrange for programmed maintenance of each individual vehicle.

In this context, "maintenance" means both maintenance as it is usually referred to and also the management of a register of motor-vehicles in dependence on which each vehicle is monitored for maintenance purposes in accordance with basic parameters detected on board, as will be explained below.

The present invention is based on the use of measurements and signals which exist on board the motor-vehicle and which are normally used for purposes other than those of the invention.

The object of the present invention is to provide a computerized system for managing motor-vehicle maintenance which is conceptually simple and of low cost but capable of providing good performance.

The present invention achieves the above-mentioned object by virtue of a computerized system for managing motor-vehicle maintenance having the characteristics specified in the appended claims.

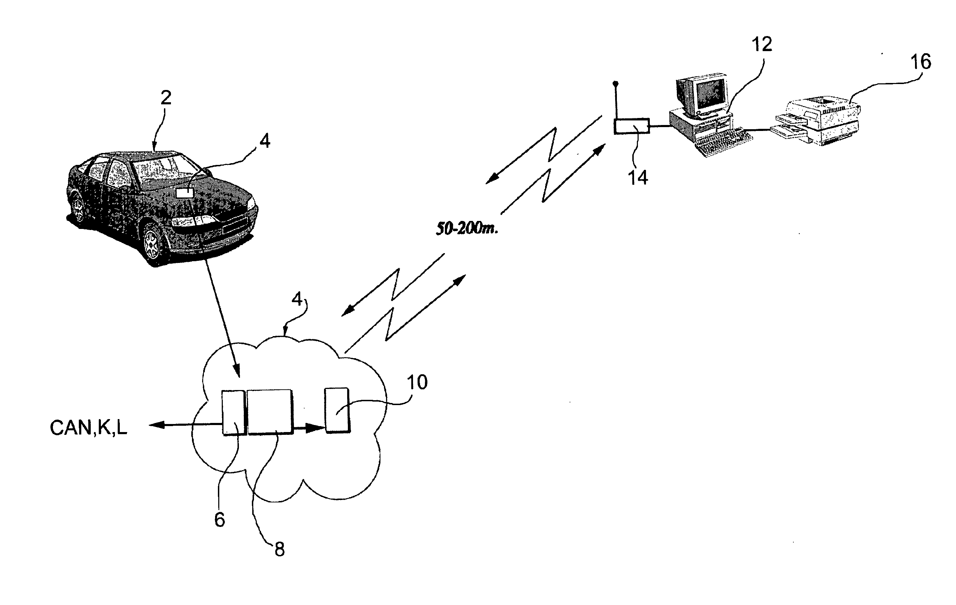

The invention will now be described with reference to the appended drawing, provided purely by way of non-limiting example, in which a motor-vehicle forming part of a fleet of motor-vehicles (not shown), on which computerized maintenance is to be performed, is indicated 2.

An electronic data-monitoring unit 4 installed in each vehicle 2 is connected to the standard ports existing on individual on-board electronic systems (ignition/engine control/ABS, etc.) or directly to the on-board "body computer", for vehicles which have one.

The electronic data-monitoring unit 4 is constituted by three functional modules combined with one another, that is: an interface module "CAN" 6 and one or more interfaces "K, L" which together constitute the front end of the electronic data-monitoring unit 4. These interfaces are individualized in dependence on the type of vehicle.

The interface module 6 periodically acquires data which is present in on-board electronic systems such as, for example, distance travelled, rate of revolution of the engine, fuel, reserve indicator lamp, battery voltages, water temperature, engine-oil pressure, hand-brake indicator lamp, generator indicator lamp, engine-oil indicator lamp, brake pedal, accelerator pedal, engine stoppage, time references relating to events, etc.

A CPU module 8 receives the on-board data from the interface module 6. The CPU module 8 controls the reading of the data by means of the ports CAN, K, L; it also performs a first processing of the data (counting of the number of events, indicating the crossing of preset thresholds, calculation of accelerations and decelerations, etc.), and controls the radio transmission of the data processed or monitored by supplying it to a radio-frequency transmitter module 10 with a range of approximately 200 metres, which sends the data processed by the CPU upon request thereby. The data may be transmitted automatically via radio-frequency by means of the radio-frequency transmitter module whenever the engine is stopped by means of the ignition key, or upon request by the driver, for example, by pressing a button, or upon request by a personal computer 12.

The personal computer 12, which is stationary, constitutes the centralized motor-vehicle maintenance management post.

The data transmitted by the radio-frequency transmitter is picked up by a radio modem 14 connected to a normal personal computer 12 via a port of any type, for example, a serial port. The radio modem 14 may have its own memory so as to be able to receive and store data even if the computer to which it is connected is temporarily switched off; for this reason, the radio modem is supplied with energy independently of the personal computer.

The data received by the radio modem 14 reaches the personal computer, in which management software is installed for permitting maintenance of the vehicles in which electronic data-monitoring units 4 have been fitted. The management software can provide for various functions such as processing of the data received from the radio modem, control of a database, presentation of the data on the monitor, printing of reports on a printer 16, and possibly transfer of information on a private or public data network. The advantages of a system according to the invention are clear from the foregoing: for each datum acquired/stored, it will be possible to set individually a warning threshold, the crossing of which will be indicated on the monitor.

For each vehicle, it is possible to set a programmed series of checking and/or maintenance operations correlated with time intervals or cumulative distance travelled; the expiry of the time parameter or the reaching of the distance travelled will give rise to a signal on the monitor which will have to be satisfied.

Naturally, the principle of the invention remaining the same, wide variations may be applied to the embodiment described and illustrated without thereby departing from the scope of the invention.

## Claims

1. A computerized system for managing motor-vehicle maintenance, **characterized in that**:
an electronic data-monitoring unit (4) is provided on each motor-vehicle (2) under maintenance,
a radio modem (14) is provided outside the vehicles (2),
a data-processing unit (12) is provided, connected to the radio modem (14),
a processing program is provided for the data-processing unit (12).

2. A system according to Claim 1, **characterized in that** it further comprises a printing unit (16) connected to the data-processing unit (12).

3. A system according to Claim 1, **characterized in that** the electronic data-monitoring unit (4) comprises an interface module CAN, K, L, (6), a CPU module (8), and a radio-frequency transmitter module (10).

4. A system according to Claim 3, **characterized in that** the interface module (6) is arranged to acquire data which is present on electronic systems on board the vehicle (2).

5. A system according to Claims 3 and 4, **characterized in that** the CPU module (8) is arranged to acquire the data via the ports CAN, K, L, (6), to perform a first processing of the data, and to control the transmission of the data processed or monitored, by means of the radio-frequency transmitter (10).

6. A system according to Claim 5, **characterized in that** the radio-frequency transmitter (10) is arranged to transmit the data upon request by the CPU module (8).

7. A system according to Claim 5, **characterized in that** the radio-frequency transmitter (10) is arranged in a manner such that the data is transmitted when the engine of the vehicle (2) is stopped by means of the ignition key.

8. A system according to Claim 1 and Claim 5, **characterized in that** the data is transmitted by the radio-frequency module (10) upon request by the data-processing unit (12).
